# EUROPÄISCHE PATENTSCHRIFT

(11) **EP 0 754 620 B1**
(45) Veröffentlichungstag und Bekanntmachung des Hinweises auf die Patenterteilung: **04.04.2001**
(21) Anmeldenummer: 95111516.1
(22) Anmeldetag: 21.07.1995
(51) Int. Cl.: B64C 27/28, B64C 29/00

(54) **Kipprotorhubschrauber**
Tilt rotor helicopter
Helicoptère à rotor basculant

(43) Veröffentlichungstag der Anmeldung: 22.01.1997
(73) Patentinhaber: Freiherr von Wilmowsky, Kaspar, 80799 München (DE)
(72) Erfinder: Freiherr von Wilmowsky, Kaspar, 80799 München (DE)
(74) Vertreter: Füchsle, Klaus, Dipl.-Ing.

(56) Entgegenhaltungen:
- FR-A- 810 054
- US-A- 3 035 789
- US-A- 3 089 666

## Beschreibung

Die Erfindung betrifft einen Kipprotorhubschrauber.

Aus der US 14 14 241 ist ein Flugzeug bekannt, mit einem Rumpf, einer Tragflächenordnung und einem Triebwerk, umfassend zwei voneinander in Längsrichtung des Rumpfes beabstandete und im wesentlichen auf einer Längsachse des Rumpfes angeordnete, jeweils von einer ersten Kipposition in eine zweite Kipposition schwenkbare Propeller, wobei der erste Propeller am vorderen Ende des Rumpfes und der zweite Propeller am hinteren Ende des Rumpfes angeordnet und der erste Propeller von der ersten Kipposition um eine im wesentlichen quer zur Längsachse des Rumpfes verlaufende Kippachse nach oben und über den Rumpf in die zweite Kipposition und der zweite Propeller von der ersten Kipposition um eine im wesentlichen quer zur Längsachse des Rumpfes verlaufende Kippachse nach unten und unter den Rumpf in die zweite Kipposition schwenkbar ist. Auf diese Weise soll die Startstrecke des Flugzeugs verkürzt oder ein Senkrechtstart ermöglicht werden.

Des weiteren ist aus der US 45 04 029 ein durch einen Hydraulikmotor angetriebenes Fluggerät mit einer Vielzahl von Propellern bekannt, daß gemäß einer Ausführungsform einen Rumpf und wenigstens einen Triebwerk umfaßt, sowie zwei voneinander in Längsrichtung des Rumpfes beabstandete, jeweils von einer ersten Kipposition für den Schwebe- oder Senkrechtflug in eine zweite Kipposition für einen Flug mit einer Fluggeschwindigkeit > 0 schwenkbare Propeller, wobei der erste Propeller am vorderen Ende des Rumpfes und im wesentlichen oberhalb desselben und der zweite Propeller am hinteren Ende des Rumpfes und im wesentlichen unterhalb desselben angeordnet und der erste Propeller von der ersten Kipposition um eine im wesentlichen quer zur Längsachse des Rumpfes verlaufende Kippachse nach vorn in eine gegenüber der Horizontalen geneigten Propellerebene in die zweite Kipposition und der zweite Propeller von der ersten Kipposition um eine im wesentlichen quer zur Längsachse des Rumpfes verlaufende Kippachse nach hinten in eine gegenüber der Horizontalen geneigte Propellerebene in die zweite Kipposition schwenkbar ist. Mit dieser Ausführungsvariante soll ein senkrecht oder auf einer sehr kurzen Startstrecke startendes Fluggerät realisiert werden, wobei für einen Horizontalflug die Propeller mit ihrer Propellerebene stets gegenüber der Horizontalen geneigt sein müssen, um eine vertikale Auftriebskomponente zu erzielen.

Aus der FR-A-810 054 und der US-A-30 89 666 sind jeweils im wesentlichen gleichartig aufgebaute Propellerflugzeuge bekannt, mit einem Rumpf, einer Tragflächenordnung und einem Triebwerk, umfassend zwei voneinander in Längsrichtung des Rumpfes beabstandete und im wesentlichen auf einer Längsachse des Rumpfes angeordnete, jeweils von einer ersten Kipposition in eine zweite Kipposition schwenkbare Propeller, wobei der erste Propeller am vorderen Ende des Rumpfes und der zweite Propeller am hinteren Ende des Rumpfes angeordnet und der erste Propeller von der ersten Kipposition um eine im wesentlichen quer zur Längsachse des Rumpfes verlaufende Kippachse nach oben und über den Rumpf in die zweite Kipposition und der zweite Propeller von der ersten Kipposition um eine im wesentlichen quer zur Längsachse des Rumpfes verlaufende Kippachse nach unten und unter den Rumpf in die zweite Kipposition schwenkbar ist. Die Propeller des Flugzeuges gemäß der US-A-30 89 666 sind für eine Schubänderung kollektiv verstellbar während die Propeller des Flugzeuges gemäß der FR-A-810 054 einfache, nicht verstellbare Propeller sind. Diese Propellerflugzeuge sind dazu ausgelegt, auf besonders kurzen Strecken zu starten und zu landen; sie sind jedoch weder für einen Schwebeflug noch für einen senkrechten Start oder eine senkrechte Landung konzipiert bzw. geeignet.

Die US-A-30 35 789 offenbart einen Kipprotorhubschrauber mit einem Rumpf, einem schwenkbaren Tragflügel, einem Triebwerk, sowie zwei gegenläufigen, zyklisch und kollektiv steuerbaren Rotoren, die in Breitenrichtung des Rumpfes voneinander beabstandet jeweils an den Enden des am Rumpf fixierten schwenkbaren Tragflügels angeordnet und zusammen mit diesem von einer ersten Kipposition für den Hubschrauberflug, in der die Rotoren in einer im wesentlichen horizontalen Ebene rotieren, in eine zweite Kipposition für den Flugzeugflug, in der die Rotoren in einer im wesentlichen vertikalen Ebene rotieren, gemeinsam und gleichsinnig verschwenkbar sind. Bei einem derartigen Kipprotorhubschrauber ist daher die gesamte Tragflügelkonstruktion einschließlich des Tragflügelschwenkmechanismus sowie der Antriebs- und Steuermittel für die Rotoren sehr aufwendig und schwer. Außerdem hat es sich gezeigt, daß der Flugzustand eines solchen Kipprotorhubschraubers in der sog. Transitionsphase, in der die Rotoren gekippt werden und das Fluggerät vom Hubschrauberflug in den Flugzeugflug übergeht, und umgekehrt, nur mit Hilfe von recht aufwendigen Flugkontroll- bzw. regelungseinrichtungen beherrschbar ist. Überdies kann dieser Kipprotorhubschraubertyp nur in einem relativ kleinen Schwerpunktsbereich geflogen werden.

Der vorliegenden Erfindung liegt die Aufgabe zugrunde, einen einfachen und effektiven Kipprotorhubschrauber zu schaffen, der sowohl für den Hubschrauberflug als auch den schnellen Flugzeugflug geeignet ist und der insbesondere in der sehr kritischen Transitionsphase zwischen Hubschrauber- und Flugzeugflug einfach und sicher kontrollierbar ist.

Diese Aufgabe wird gelöst durch einen Kipprotorhubschrauber mit den Merkmalen des Anspruchs 1.

Der erfindungsgemäße Kipprotorhubschrauber ist sowohl in der Lage im Hubschrauberflug zu fliegen, senkrecht zu starten, zu landen und zu schweben als auch bei entsprechender Kipposition der Rotoren sich im schnellen Flugzeugflug fortzubewegen, wobei es möglich ist, die bei Hubschraubern üblicherweise aufgrund des maximal zu erzielenden Fortschrittsgrads limitierte Fluggeschwindigkeit erheblich zu überschreiten. Aufgrund der erfindungsgemäßen Anordnung und Verschwenkbarkeit der zyklisch steuerbaren Rotoren sowie der Art und Weise der Steuerung der Rotoren wird ein sehr stabiles, gut kontrollierbares Flugverhalten insbesondere in der sehr kritischen Transitionsphase vom Hubschrauber- in den Flugzeugflug, und umgekehrt, erzielt. Infolge der durch die zyklische Blattverstellung der Rotoren realisierbaren Auftriebsverteilung der Rotoren kann ferner das Kippen der Rotoren aktiv unterstützt werden, wodurch wiederum das Gewicht des Rotorkippmechanismus erheblich reduzierbar ist. Dies wirkt sich sehr positiv auf das Leergewicht und die erzielbare Nutzlast des erfindungsgemäßen Kipprotorhubschraubers aus. Ferner ist es aufgrund der zyklischen Steuerbarkeit der Rotoren, die auch im Flugzeugflug aufrechterhalten wird, möglich, die aerodynamische Steuerung des Kipprotorhubschraubers im Flugzeugflug aktiv zu unterstützen, was sowohl die Wendigkeit als auch Stabilität stark erhöht.

Weitere vorteilhafte Ausgestaltungen des erfindungsgemäßen Kipprotorhubschraubers sind Gegenstand der Unteransprüche.

Ein Ausführungsbeispiel des erfindungsgemäßen Kipprotorhubschraubers mit weiteren Ausgestaltungsmerkmalen und Vorteilen wird nachfolgend unter Bezugnahme auf die Zeichnungen erläutert.

Es zeigen:
- Fig. 1: eine schematische Seitenansicht des erfindungsgemäßen Kipprotorhubschraubers,
- Fig. 2: eine schematische Draufsicht des erfindungsgemäßen Kipprotorhubschraubers,
- Fig. 3: einen erfindungsgemäßen Rotorkippmechanismus in schematischer Draufsicht und Seitenansicht,
- Fig. 4: eine Anlenkeinrichtung zu der Taumelscheibe eines jeden Rotors des erfindungsgemäßen Kipprotorhubschraubers in schematischer Seitenansicht und Draufsicht,
- Fig. 5: eine Taumelscheibenanlenkvorrichtung eines Rotors in schematischer Seitenansicht und Draufsicht,
- Fig. 6: eine schematische Seitenansicht einer Steuereinrichtung des erfindungsgemäßen Kipprotorhubschraubers,
- Fig. 7: eine schematische Darstellung in mehreren Blickrichtungen eines Mischers der Steuereinrichtung des erfindungsgemäßen Kipprotorhubschraubers, und
- Fig. 8: eine schematische Darstellung in mehreren Blickrichtungen einer Trimmung der Steuereinrichtung.

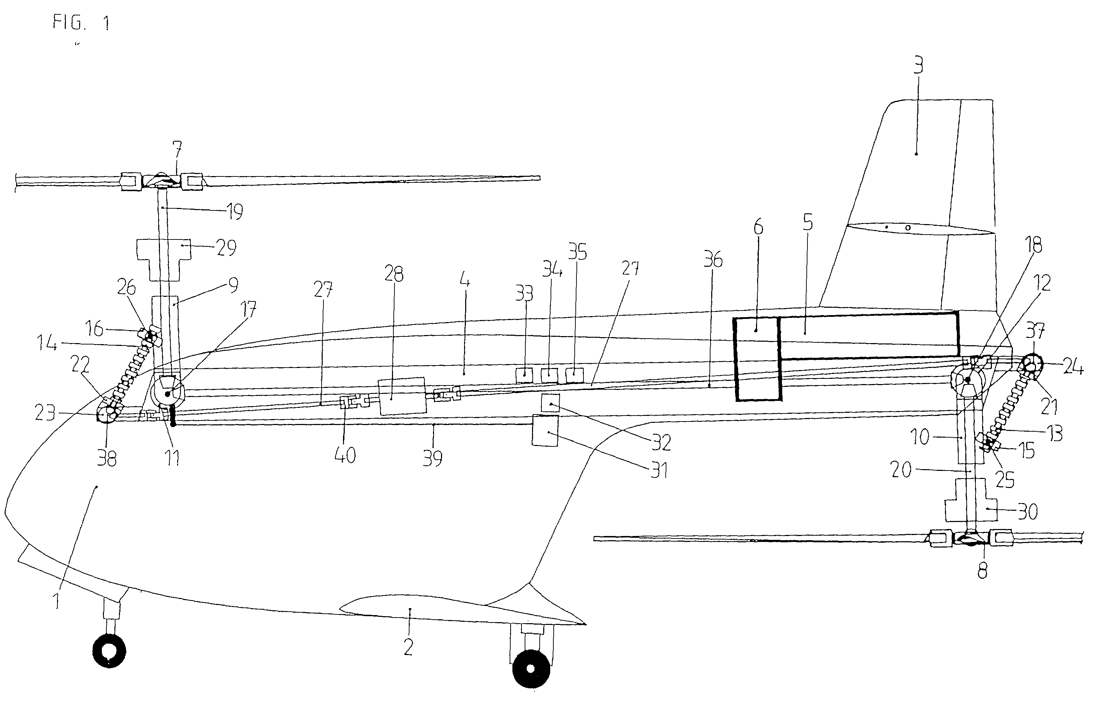

Der Fig. 1 ist eine schematische Seitenansicht des erfindungsgemäßen Kipprotorhubschraubers zu entnehmen. Der Hubschrauber umfaßt einen Rumpf 1, eine Tragflügelanordnung 2, eine Leitwerksanordnung mit Seitenleitwerk 3.1 und Höhenleitwerk 3.2, zwei gegenläufige, voneinander in Längsrichtung des Rumpfes 1 beabstandete und im wesentlichen auf einer Längsachse des Rumpfes 1 angeordnete, jeweils von einer ersten Kipposition für den Hubschrauberflug in eine zweite Kipposition für den Flugzeugflug schwenkbar, zyklisch steuerbare Rotoren 7, 8, wobei der erste Rotor 7 am vorderen Ende des Rumpfes 1 und im wesentlichen oberhalb desselben und der zweite Rotor 8 am hinteren Ende des Rotors 1 und im wesentlichen unterhalb desselben angeordnet und der erste Rotor 7 von der ersten Kipposition um eine im wesentlichen quer zur Längsachse des Rumpfes 1 verlaufende Kippachse 17 nach unten und vor den Rumpf 1 in die zweite Kipposition und der zweite Rotor 8 von der ersten Kipposition um eine im wesentlichen quer zur Längsachse des Rumpfes 1 verlaufende Kippachse 18 nach oben und hinter den Rumpf 1 in die zweite Kipposition schwenkbar ist, sowie ein Triebwerk 5 zum Antrieb der Rotoren 7, 8.

Der Rumpf 1 besitzt eine nicht näher dargestellte Kabine, und eine Flügelhalterung für den unten am Rumpf 1 angeordneten Tragflügel 2. Der Tragflügel 2 verfügt über Querruder und kann ferner mit Klappen ausgestattet sein, die im Hubschrauberflug den Luftwiderstand reduzieren.

Der Rumpf 1 ist mit einem Träger 4 für Rotorhalterungen 9, 10 und die Antriebseinheit 5 versehen. Gemäß einer Ausführungsform des erfindungsgemäßen Kipprotorhubschraubers kann auch der Rumpf 1 selbst als der Längsträger 4 ausgebildet sein.

Wie in der Fig. 1 gut zu erkennen, besitzt der Rumpf 1 einen extrem hoch angeordneten Heckausleger, in dem das Triebwerk 5 angeordnet ist. Je nach Anwendungsfall, können ein oder mehrere Triebwerke 5 verwendet werden. Die vorhergenannte Anordnung dient dazu die Schwerpunktslage des Kipprotorhubschraubers und die Geräuschkulisse in der Kabine zu optimieren.

Des weiteren umfaßt der Rumpf 1 in den Zeichnungen nicht weiter dargestellten Tankbehälter, die an geeigneten Stellen des Rumpfes des Kipprotorhubschraubers eingebaut sind, z.B. über oder seitlich des Trägers 4, im hinteren Teil der Kabine, im Flügel 2 oder in den Leitwerken 3.1, 3.2.

Die Fig. 1 zeigt den Kipprotorhubschrauber in einer für den Hubschrauberflug vorgesehenen Rotorkipposition, wobei der vordere Rotor 7 über und der hintere Rotor 8 unter den Rumpf 1 gekippt ist.

Die Antriebseinheit des Kipprotorhubschraubers umfaßt das Triebwerk 5, ein Getriebe 6, eine Rotorantriebswelle 36, die eine mechanische Verbindung zwischen den beiden Rotoren 7, 8 herstellt, und zwei mit der Rotorantriebswelle 36 korrespondierende Kegelradgetriebe 11, 12, je ein Kegelradgetriebe für den vorderen 7 und ein Kegelradgetriebe für den hinteren Rotor 8. Diese Kegelradgetriebe 11, 12 gewährleisten, daß die Rotoren 7, 8 in jeder beliebigen Rotorkippstellung angetrieben werden können. Die Rotoren 7, 8 rotieren gegenläufig, um auf vorteilhafte Weise die auf das Gesamtsystem Kipprotorhubschrauber wirkenden Rotorkräfte zu kompensieren.

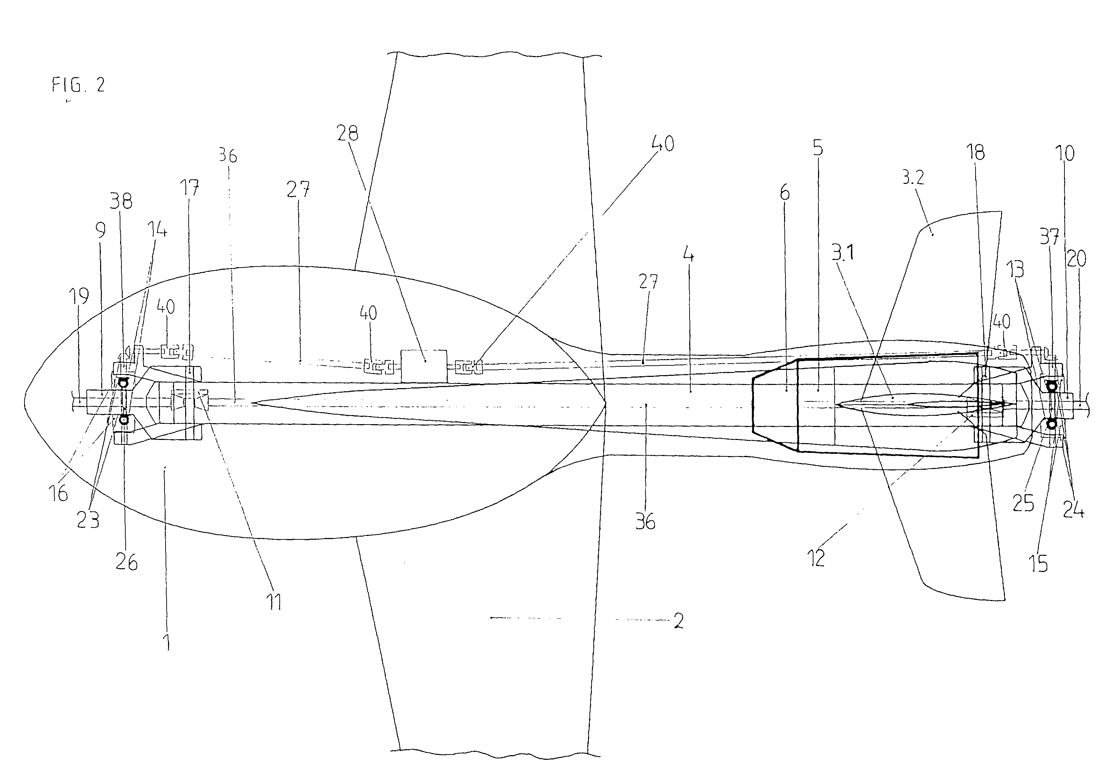

Die Fig. 2 zeigt den erfindungsgemäßen Kipprotorhubschrauber in einer schematischen Draufsicht, wobei sich die Rotoren in einer für den Flugzeugflug geeigneten Position befinden, d.h. der vordere Rotor 7 ist vor und der hintere Rotor 8 hinter den Rumpf 1 geschwenkt. Wie der Zeichnung zu entnehmen, sind die Rotorwellen 19, 20 der beiden Rotoren in gabelförmigen Rotorhalterungen 9, 10 gelagert und mit den Kegelradgetrieben 11 bzw. 12 verbunden. Auf diese Weise ist ein Kippen der sich drehenden Rotoren 7, 8 um die Kippachsen 17, 18 möglich.

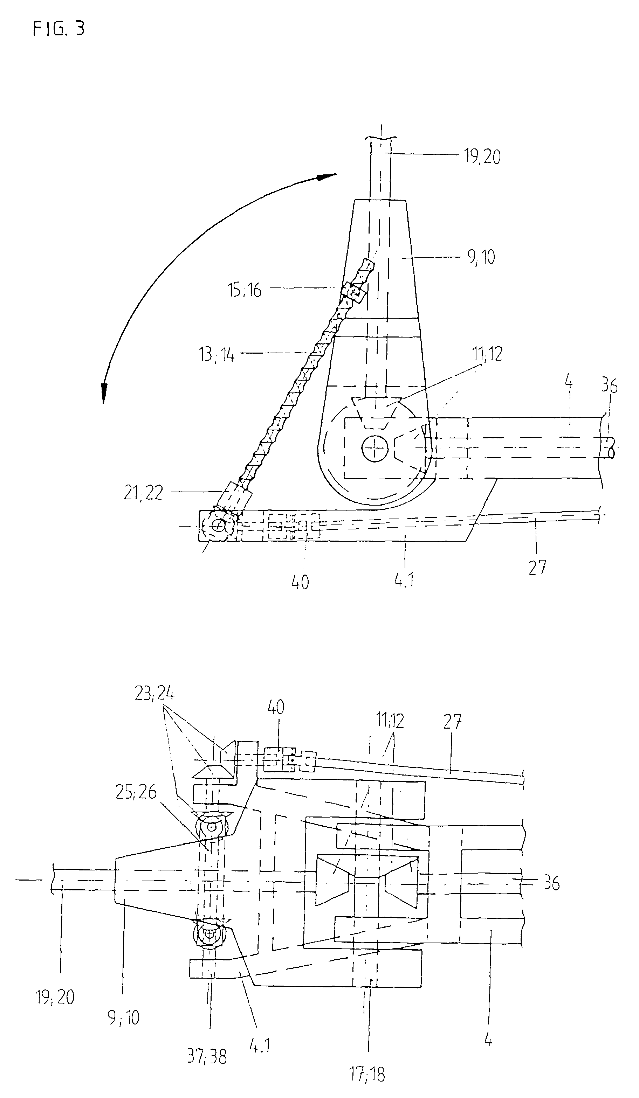

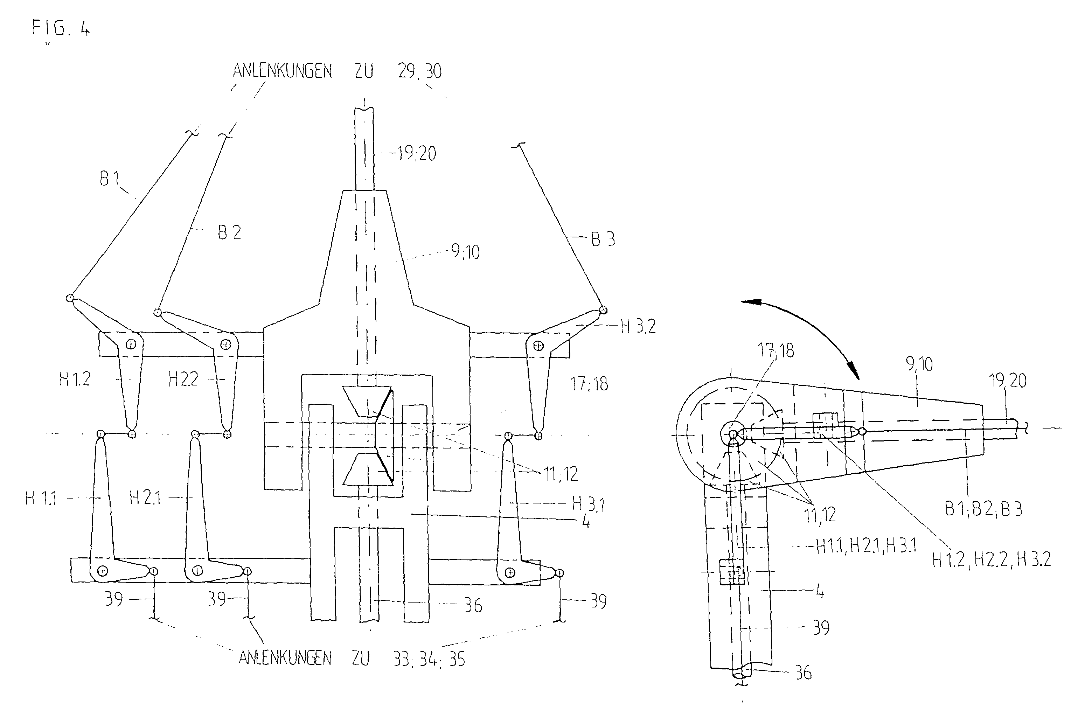

Aus der Fig. 3, die den Kippmechanismus des erfindungsgemäßen Kipprotorhubschraubers in Seitenansicht und Draufsicht darstellt, geht hervor, daß die gabelförmige Rotorhalterung 9, 10 eines jeweiligen Rotors 7, 8 über die Achsen 17 bzw. 18 mit einem jeweiligen Ende des Längsträgers 4 verbunden ist. Der Kippmechanismus eines jeweiligen Rotors umfaßt des weiteren jeweils zwei angetriebene Gewindestange 13, 14, die in der Form eines Dreischlags an einem Ende mit der Rotorhalterung 9, 10 und mit dem anderen Ende mit einem gabelförmigen Auslegerarm 4.1 des Längsträgers 4 gelenkig verbunden sind. Die der Rotorhalterung 9, 10 zugeordneten Enden der jeweils zwei Gewindestangen 13, 14 sind in Gewindebuchsen 15, 16 und die dem Auslegerarm 4.1 zugeordneten Enden in Halterungen 21, 22 gelagert, die um eine Achse 37, 38 schwenkbar angeordnet sind. Wie der Fig. 3 weiter zu entnehmen, verfügt die Gewindestangenanordnung ferner über ein Kegelradgetriebe 23, 24 mit Achsen 25, 26, die über Antriebswellen 27 angetrieben werden. Wie in der Fig. 1 angedeutet, erfolgt die Kraftübertragung auf die Antriebswelle 27 des Schwenkmechanismus durch einen im Rumpf 1 angeordneten Elektromotor 28. Eine Antriebswelle 27 ist jeweils an ihrem zum Elektromotor 28 und zum Kegelradgetriebe 23, 24 des Kippmechanismus weisenden Ende über ein geeignetes Gelenk 40 mit dem Kegelradgetriebe 23, 24 und dem Elektromotor 28 verbunden. Je nach Antriebsrichtung der Welle 27 werden die beiden Rotoren 7, 8 über die Kegelradgetriebe 23, 24 und die Gewindestangen 13, 14 synchron in der oben beschriebenen Art und Weise gekippt, wobei die Kippbewegung um die Kippachsen 17, 18 erfolgt. Die Kipprichtung ist am Beispiel des vorderen Rotors 7 in den Fig. 3 und 4 durch einen Doppelpfeil angedeutet.

Während der Betätigung des Kippmechanismus kann gleichzeitig eine Rotorsteuerung durchgeführt werden, die das Kippen der Rotoren 7, 8 unterstützt: Während der Transitionsphase vom Hubschrauber in den Flugzeugflug, oder umgekehrt, bei der der vordere Rotor 7 von seiner Position oberhalb des Rumpfes 1 um die Kippachse 17 nach unten und vor den Rumpf und der hintere Rotor 8 von seiner Position unterhalb des Rumpfes nach oben und hinter den Rumpf schwenkt, wird die Taumelscheibe 41 eines jeweiligen Rotors mit Hilfe der zyklischen Blattverstellung so angesteuert, daß die Rotoren von sich aus aufgrund ihrer veränderten Auftriebsverteilung die Kippbewegung der Rotoren in entsprechender Richtung unterstützen.

Um die Steuerung der Rotoren 7, 8, die, wie oben dargelegt, über eine geeignete Ansteuerung der Taumelscheibe 41 eines jeden Rotors erfolgt, auch während der Kippbewegung in der Transitionsphase zu gewährleisten, ist, wie in Fig. 4 dargestellt, für jeden Rotor 7, 8 eine um die jeweilige Rotorschwenkachse 17, 18 schwenkbare und unabhängig von der jeweiligen Rotorkippstellung steuerbare Anlenkeinrichtung zu jeder Taumelscheibe 41 eines Rotors vorgesehen. Bei dieser Anlenkeinrichtung handelt es sich um jeweils drei einem Rotor 7, 8 zugeordnete Hebelpaare H1.1, H1.2; H2.1, H2.2; H3.1, H3.2, die über ein Zwischenstück gelenkig miteinander verbunden sind, wobei jeweils ein Teil der Hebelpaare, nämlich die Hebel H1.1, H2.1, H3.1, auf der Seite des Längsträgers 4 und der andere Teil der Hebelpaare, nämlich die Hebel H1.2, H2.2, H3.2, an der Rotorhalterung 9, 10 eines jeweiligen Rotors angeordnet sind. An die einer jeweiligen Rotorhalterung 9, 10 zugeordneten Hebel H1.1, H2.1, H3.1 schließen sich Taumelscheiben-Steuerstangen B1, B2, B3 an, die zu der in Fig. 4 nicht dargestellten, am Rotormast befindlichen Taumelscheibenanlenkvorrichtung 29, 30 der Taumelscheibe 41 führen. Wie in der Fig. 4 gut zu erkennen, sind die gelenkigen Verbindungsstellen zwischen den Hebeln H1.1, H2.1, H3.1 und H1.2, H2.2, H3.2 genau auf der Kippachse 17, 18 des Kippmechanismus eines jeweiligen Rotors 7, 8 angeordnet, so daß in jeder Rotorkippstellung eine von dieser unabhängigen Anlenkung zu einer jeweiligen Taumelscheibe 41 bzw. deren Taumelscheibenanlenkvorrichtung 29, 30 gewährleistet ist.

Steuerelemente, wie z.B. Stangen, Seilzüge oder Bowdenzüge, die der Anlenkung und Betätigung diverser Baugruppen von Anlenk- und Steuereinrichtungen des Kipprotorhubschraubers dienen, sind in den Figuren allgemein mit dem Bezugszeichen 39 gekennzeichnet.

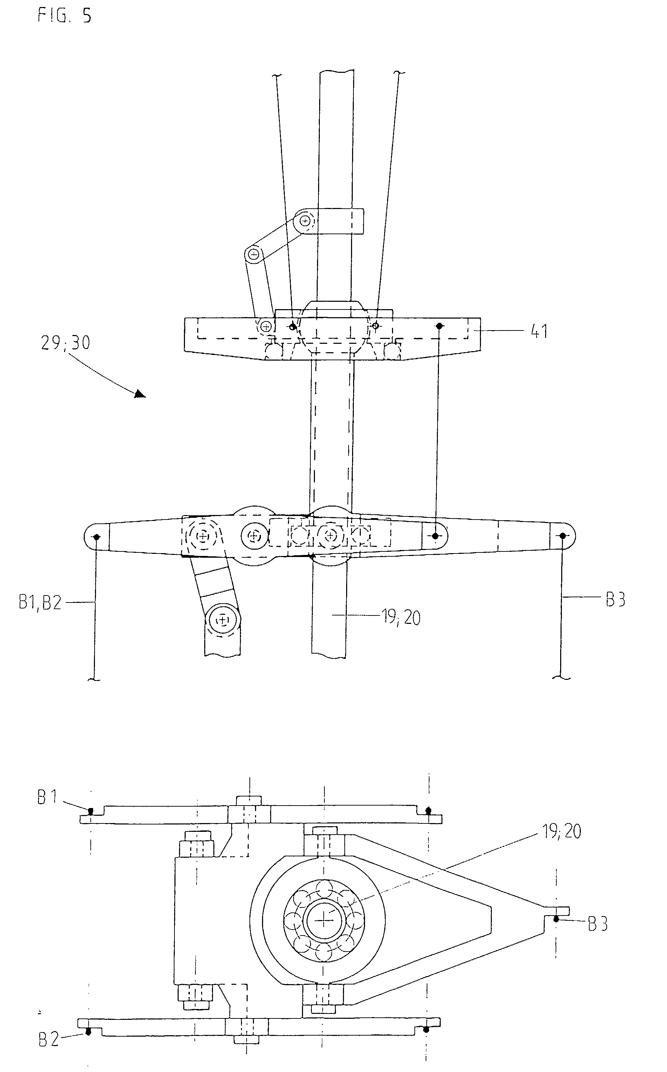

In der Fig. 5 ist in schematischer Seitenansicht und Draufsicht die Taumelscheibenanlenkvorrichtung 29, 30 der Taumelscheibe 41 eines jeweiligen Rotors 7, 8 detaillierter gezeigt. Hierbei sind nochmals gut die von den Hebeln H1.2, H2.2 und H3.2 der Fig. 4 ausgehenden Taumelscheiben-Steuerstangen B1 bis B3 zu erkennen. Aus der Darstellung der Fig. 5 wird offensichtlich, daß die Steuerstange B3 der Kollektivsteuerung und die Steuerstangen B1 und B2 der zyklischen Steuerung der Taumelscheibe 41 und der Rotorblätter des Rotors dienen. Für jeden Rotor 7, 8 stehen damit drei Steuermöglichkeiten zur Verfügung, nämlich kollektive Blattverstellung (Pitch) und Nicken und Rollen durch zyklische Blattverstellung, wofür lediglich die drei vorhergenannten Anlenkungen benötigt werden.

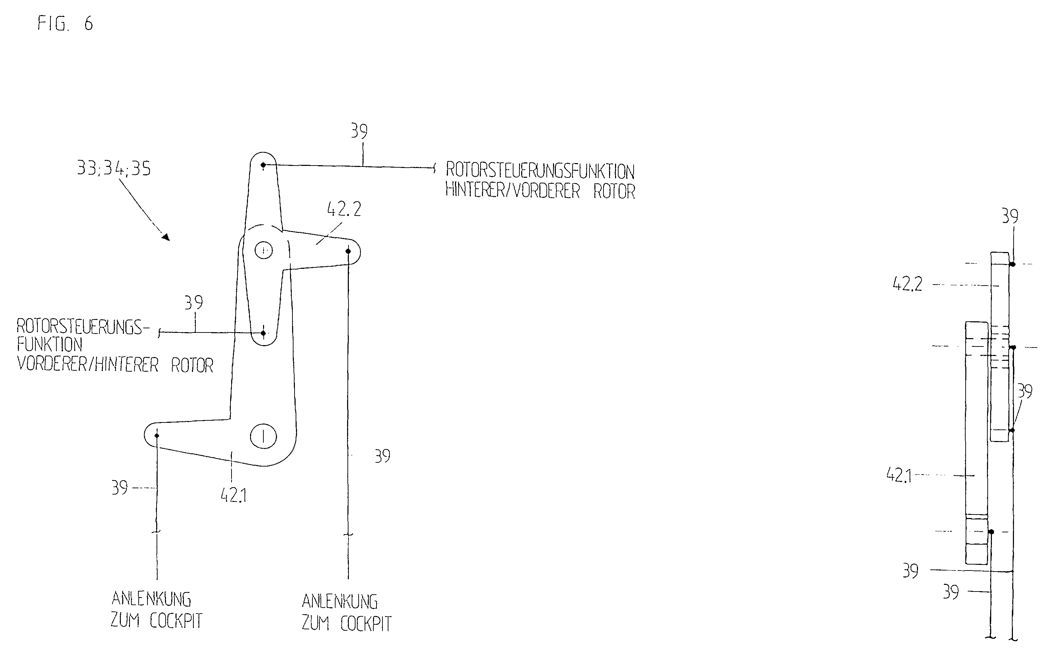

Der erfindungsgemäße Kipprotorhubschrauber umfaßt für die Rotorsteuerung drei jeweils gleiche Steuerungseinrichtungen 33, 34, 35 mit mechanischen Steuerungselementen. Diese Steuerungseinrichtungen verbinden die Steuerfunktionen der beiden Rotoren 7, 8 über eine in Fig. 6 in schematischer Seitenansicht und Draufsicht dargestellte Hebelanordnung, die einen L-förmigen Hebel 42.1 umfaßt, der mit einem T-förmigen Hebel 42.2 zusammenwirkt. Über diese Hebelanordnung werden die Nickfunktionen des vorderen Rotors mit der Nickfunktion des hinteren Rotors, die Rollfunktion des vorderen Rotors mit der Rollfunktion des hinteren Rotors und die Pitchfunktion des vorderen Rotors mit der Pitchfunktion des hinteren Rotors kombiniert.

Hieraus ergeben sich sechs Rotorsteuerungsfunktionen, die nachfolgend mit S1 bis S6 bezeichnet werden:

| | Rotorsteuerungsfunktion |
|---|---|
| S1 | Pitch vorderer Rotor entgegengesetzt Pitch hinterer Rotor |
| S2 | Pitch vorderer Rotor gleichsinnig Pitch hinterer Rotor |
| S3 | Rollbewegung vorderer Rotor entgegengesetzt Rollbewegung hinterer Rotor |
| S4 | Rollbewegung vorderer Rotor gleichsinnig Rollbewegung hinterer Rotor |
| S5 | Nickbewegung vorderer Rotor entgegengesetzt Nickbewegung des hinterer Rotor |
| S6 | Nickbewegung vorderer Rotor gleichsinnig Nickbewegung des hinterer Rotor |

Diese Funktionen S1-S6 der Rotorsteuerung werden wir folgt auf die Steuerungsfunktion des Kipprotorhubschraubers übertragen:

| Funktion des Kipprotorhubschraubers | Funktion der Rotorsteuerung im Hubschrauberflug | Funktion der Rotorsteuerung in Transitionsphase | Funktion der Rotorsteuerung im Flugzeugflug |
|---|---|---|---|
| Kollektive Blattverstellung | S2 | S2 | S2 |
| Gieren | S3 | S3 | S3 |
| Rollen | S4 | S4 | S4 |
| Nicken | S1 | S1 und S5 | S5 |
| Sonderfunktion | - | S6 | - |

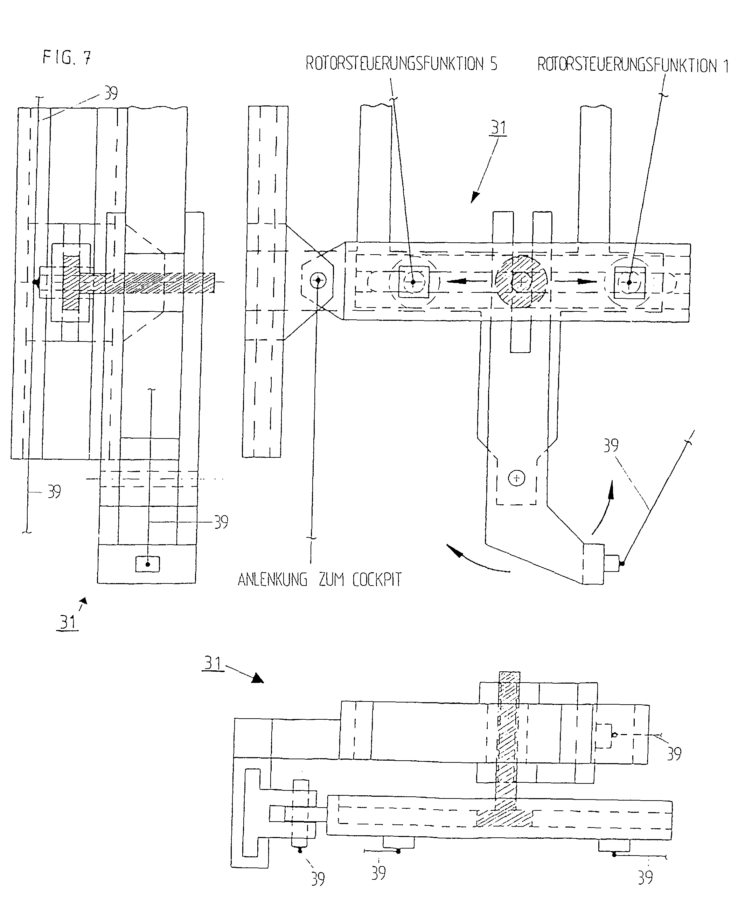

Die Nickfunktion des Kipprotorhubschraubers erfordert eine Mischung der Funktion S1 mit der Funktion S5 der Rotorsteuerung. Dies wird über einen mechanischen Mischer 31 erreicht, wie er in der Fig. 7 schematisch in drei Ansichten dargestellt ist.

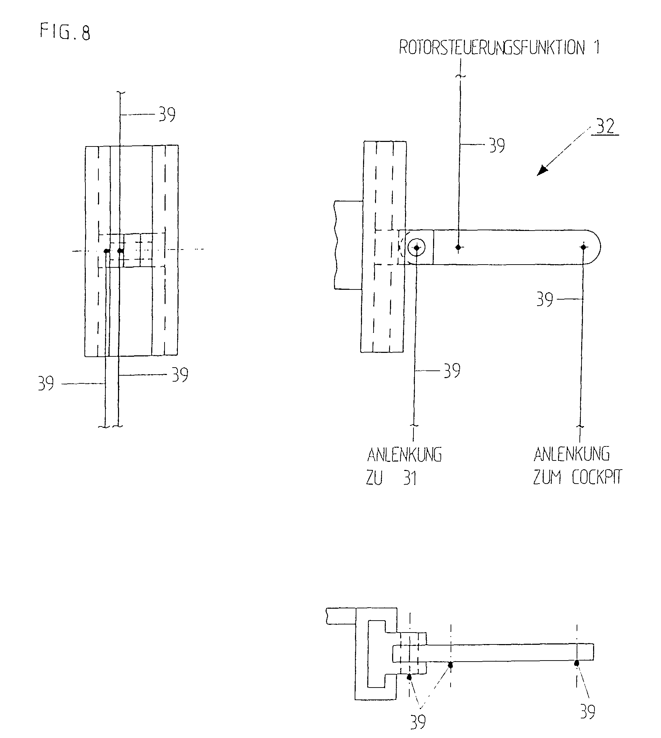

Um die Rotorsteuerungsfunktion S1, die im Flugzeugflug durch den Mischer 31 ausgeschaltet ist, im Flugzeugflug separat steuern zu können, ist eine separate Trimmung 32 (vgl. auch Fig. 1) zwischen dem Mischer 31 und der Steuereinrichtung 33, 34 oder 35 vorgesehen, die es ermöglicht die Rotorsteuerungsfunktion S1 im Flugzeugflug und falls erforderlich ist auch im Hubschrauberflug zu trimmen. Die Trimmung ist im Detail in der Fig. 8 dargestellt.

Der Mischer 31 wird ferner über mechanische Steuerelemente 39, von einem der beiden Rotorhalterungen 9, 10 angelenkt, so daß beim Kippen der Rotoren 7, 8 der Mischer bedient wird.

Die Ruder der Tragfläche 2 und der Leitwerke sind über mechanische Steuerelemente 39 mit der Rotorsteuerung verbunden: das Höhenruder des Höhenleitwerks 3.2 mit der Nickfunktion der Rotoren 7, 8, das Seitenruder des Seitenleitwerks 3.2 mit der Gierfunktion der Rotoren 7, 8 und das Querruder der Tragfläche 2 mit der Rollfunktion der Rotoren 7, 8.

Die Steuerungsfunktionen des Kipprotorhubschraubers können zum Beispiel durch im hinteren Teil der Kabine angeordnete Kraftverstärker, wie etwa hydraulische Aktuatoren, verstärkt sein.

### Bezugszeichenliste

Es bezeichnen:
- 1: Rumpf
- 2: Flügel
- 3.1: Seitenleitwerk
- 3.2: Höhenleitwerk
- 4: Träger
- 4.1: Auslegerarm von 4
- 5: Triebwerke
- 6: Getriebe
- 7: Rotor, vorderer
- 8: Rotor, hinterer
- 9: Rotorhalterung, gabelförmig

- 10: Rotorhalterung, gabelförmig
- 11: Kegelgetriebe
- 12: Kegelgetriebe
- 13: Gewindestange
- 14: Gewindestange
- 15: Gewindebuchse
- 16: Gewindebuchse
- 17: Kippachse
- 18: Kippachse
- 19: Rotorwelle

- 20: Rotorwelle
- 21: Halterung für 13
- 22: Halterung für 14
- 23: Kegelgetriebe
- 24: Kegelgetriebe
- 25: Achse
- 26: Achse
- 27: Antriebswelle für Kippmechanismus
- 28: Elektromotor
- 29: Taumelscheibenanlenkvorrichtung

- 30: Taumelscheibenanlenkvorrichtung
- 31: Mischer
- 32: Trimmung
- 33: Steuerungseinrichtung
- 34: Steuerungseinrichtung
- 35: Steuerungseinrichtung
- 36: Rotorantriebswelle
- 37: Halterungsachse für 21
- 38: Halterungsachse für 22
- 39: Steuerstange/Seilzug

- 40: Gelenk

- 41: Taumelscheibe

- 42.1: Hebel (von 33, 34, 35)
- 42.2: Hebel (von 33, 34, 35)

- B1: Taumelscheiben-Steuerstange, zykl.
- B2: Taumelscheiben-Steuerstange, zykl.
- B3: Taumelscheiben-Steuerstange, koll.

- H1.1: Hebel
- H2.1: Hebel
- H3.1: Hebel

- H1.2: Hebel
- H2.2: Hebel
- H3.2: Hebel

## Patentansprüche

1. Kipprotorhubschrauber mit einem Rumpf (1), einer Tragflügelanordnung (2) und wenigstens einem Triebwerk (5), umfassend
- zwei gegenläufige, voneinander in Längsrichtung des Rumpfes (1) beabstandete und im wesentlichen auf einer Längsachse des Rumpfes (1) angeordnete, jeweils von einer ersten Kipposition für den Hubschrauberflug in eine zweite Kipposition für den Flugzeugflug schwenkbare, zyklisch steuerbare Rotoren (7, 8), wobei
- der erste Rotor (7) am vorderen Ende des Rumpfes (1) und im wesentlichen oberhalb desselben und der zweite Rotor (8) am hinteren Ende des Rumpfes (1) und im wesentlichen unterhalb desselben angeordnet und
- der erste Rotor (7) von der ersten Kipposition um eine im wesentlichen quer zur Längsachse des Rumpfes (1) verlaufende Kippachse (17) nach unten und vor den Rumpf (1) in die zweite Kipposition und
- der zweite Rotor (8) von der ersten Kipposition um eine im wesentlichen quer zur Längsachse des Rumpfes (1) verlaufende Kippachse (18) nach oben und hinter den Rumpf (1) in die zweite Kipposition schwenkbar ist.

2. Kipprotorhubschrauber nach Anspruch 1, dadurch gekennzeichnet, daß dieser mechanische Steuerelemente (29, 30, 33-35, 39, B1-B3, H1.1-H3.2) für die Rotorsteuerung umfaßt.

3. Kipprotorhubschrauber nach Anspruch 1 oder 2, dadurch gekennzeichnet, daß für jeden Rotor (7, 8) eine um die jeweilige Rotorschwenkachse (17, 18) schwenkbare und unabhängig von der jeweiligen Rotorkippstellung steuerbare Anlenkeinrichtung (H1.1, H2.1, H3.1; H1.2, H2.2, H3.2) zu einer Taumelscheibe (41) eines jeweiligen Rotors (7, 8) vorgesehen ist, um in jeder Rotorkippstellung eine von dieser unabhängige Anlenkung einer jeweiligen Taumelscheibe (41) zu gewährleisten.

4. Kipprotorhubschrauber nach Anspruch 3, dadurch gekennzeichnet, daß die jeweiligen Anlenkungen (H1.1-H3.2) des ersten Rotors (7) über Steuerungseinrichtungen (33, 34, 35, 39, 42.1, 42.2, H1.1-H3.2) mit den jeweiligen Anlenkungen (H1.1-H3.2) des zweiten Rotors (8) gleichsinnnig und gegensinnig bedienbar verbunden sind.

5. Kipprotorhubschrauber nach einem oder mehreren der vorgenannten Ansprüche, dadurch gekennzeichnet, daß die Rotoren (7, 8) über Getriebe (11, 12, 36) miteinander verbunden und in jeder Kippstellung angetrieben sind.

6. Kipprotorhubschrauber nach einem oder mehreren der vorgenannten Ansprüche, dadurch gekennzeichnet, daß die Rotorwellen (19, 20) der Rotoren (7, 8) jeweils durch einen gabelförmigen Rotorhalter (9, 10) mit Kegelgetrieben (11, 12) um die Schwenkachsen (17, 18) schwenkbar verbunden sind.

7. Kipprotorhubschrauber nach Anspruch 4, dadurch gekennzeichnet, daß die Steuerungseinrichtungen (33, 34, 35) über einen oder mehrere Mischer (31) verfügen, die Steuerungsfunktionen (S1-S6) der Rotoren (7, 8) in Abhängigkeit der Kippstellung der Rotoren (7, 8) mischen.

8. Kipprotorhubschrauber nach Anspruch 7, dadurch gekennzeichnet, daß dieser eine Trimmeinrichtung (32) zum separaten Trimmen der über den Mischer (31) gemischten Steuerfunktionen (S1-S6) in jeder Kippstellung der Rotoren (7, 8) umfaßt.

9. Kipprotorhubschrauber nach einem oder mehreren der vorgenannten Ansprüche, dadurch gekennzeichnet, daß dieser eine elektrische, mechanische oder hydraulische Kippeinrichtung (11-16, 21-24, 27, 28) zum Kippen der Rotoren (7, 8) umfaßt.

10. Kipprotorhubschrauber nach einem oder mehreren der vorgenannten Ansprüche, dadurch gekennzeichnet, daß dieser mit Leitwerken (3.1, 3.2) ausgestattet ist, die die Steuerung im Flugzeugflug unterstützen.

## Claims

1. Tilt rotor helicopter with a fuselage (1), a wing structure (2) and at least one power unit (5), comprising
- two counter-running rotors (7, 8), spaced apart in the longitudinal direction of the fuselage (1) and substantially mounted on a longitudinal axis of the fuselage (1), rotatable in each case from a first tilting position for helicopter flight into a second tilting position for airplane flight, and cyclically controllable,
- the first rotor (7) being mounted at the front end of the fuselage (1) and substantially above said fuselage and the second rotor (8) at the back end of the fuselage (1) and substantially below said fuselage and
- the first rotor (7) being pivotable from the first tilting position about a swivel axis (17) running substantially transversely to the longitudinal axis of the fuselage (1) downwards and in front of the fuselage (1) into the second position and
- the second rotor (8) being pivotable from the first tilting position about a swivel axis (18) running substantially transversely to the longitudinal axis of the fuselage (1) upwards and behind the fuselage (1) into the second tilting position.

2. Tilt rotor helicopter according to Claim 1, characterized in that it comprises mechanical control elements (29, 30, 33-35, 39, B1-B3, H1.1-H3.2) for controlling the rotors.

3. Tilt rotor helicopter according to Claim 1 or 2, characterized in that for each rotor (7, 8) a coupling device (H1.1, H2.1, H3.1, H1.2, H2.2, H3.2), pivotable about the respective swivel axis of the rotor and controllable irrespective of the respective tilting position of the rotor, is provided to a swash plate (41) of each rotor (7, 8), in order to guarantee coupling of each swash plate (41) in every tilting position of the rotor and independently thereof.

4. Tilt rotor helicopter according to Claim 3, characterized in that the respective couplings (H1.1-H3.2) of the first rotor (7) are connected via controlling devices (33, 34, 35, 39, 42.1, 42.2, H1.1-H3.2) to the respective couplings (H1.1-H3.2) of the second rotor (8) so that they can be operated in the same direction and in opposite directions.

5. Tilt rotor helicopter according to one or more of the preceding claims, characterized in that the rotors (7, 8) are connected to one another via gears (11, 12, 36) and driven in every tilting position.

6. Tilt rotor helicopter according to one or more of the preceding claims, characterized in that the rotor shafts (19, 20) of the rotors (7, 8) are connected pivotably about the swivelling axes (17, 18) in each case by a forked rotor holder (9, 10) with conical gears (11, 12).

7. Tilt rotor helicopter according to Claim 4, characterized in that the controlling devices (33, 34, 35) have one or more mixers (31) which mix controlling functions (S1-S6) of the rotors (7, 8) as a function of the tilting position of the rotors (7, 8).

8. Tilt rotor helicopter according to Claim 7, characterized in that it comprises a trimming device (32) for separate trimming of the controlling functions (S1-S6) mixed via the mixer (31) in every tilting position of the rotors (7, 8).

9. Tilt rotor helicopter according to one or more of the preceding claims, characterized in that it comprises an electrical, mechanical or hydraulic tilting device (11-16, 21-24, 27, 28) for tilting the rotors (7, 8).

10. Tilt rotor helicopter according to one or more of the preceding claims, characterized in that it is equipped with tail units (3.1, 3.2) which support control in airplane flight.

## Revendications

1. Hélicoptère à rotor basculant, muni d'un fuselage (1), d'un agencement à aile porteuse (2) et d'au moins un propulseur (5), comprenant
- deux rotors (7, 8) susceptibles d'être soumis à une commande cyclique, tournant en sens inverse, espacés l'un de l'autre dans la direction longitudinale du fuselage (1) et disposés sensiblement sur un axe longitudinal du fuselage (1), susceptible de pivoter chaque fois d'une première position basculée, pour le vol en hélicoptère, en une deuxième position basculée, pour le vol en avion, où
- le premier rotor (7) est disposé à l'extrémité avant du fuselage (1) et sensiblement au-dessus de celui-ci, et le deuxième rotor (8) est disposé sur l'extrémité arrière du fuselage (1) et sensiblement au-dessous de celui-ci, et
- le premier rotor (7) est susceptible de pivoter, autour d'un axe de basculement (17) sensiblement transversal à l'axe longitudinal du fuselage (1), de la première position basculée vers le bas et devant le fuselage (1), à la deuxième position de basculement, et
- le deuxième rotor (8) est susceptible de pivoter, autour d'un axe de basculement (18) sensiblement transversal par rapport à la direction longitudinale du fuselage (1), de la première position basculée vers le haut et derrière le fuselage (1), à la deuxième position de basculement.

2. Hélicoptère à rotor basculant selon la revendication 1, caractérisé en ce que celui-ci comprend des éléments de commande (29, 30, 33-35, 39, B1-B3, H1.1-H3.2) de nature mécanique, pour assurer la commande du rotor.

3. Hélicoptère à rotor basculant selon la revendication 1 ou 2, caractérisé en ce que, pour chaque rotor (7, 8), est prévu un dispositif d'articulation (H1.1, H2.1, H3.1 ; H1.2, H2.2, H3.2) susceptible de pivoter autour de l'axe de pivotement de rotor (17, 18) respectif et susceptible d'être commandé indépendamment de la position basculée respective de rotor, établissant une articulation à un disque de nutation ou plateau cyclique (41) d'un rotor (7, 8) respectif, afin d'assurer en toute position de basculement de rotor une articulation, indépendante de celle-ci, de chaque disque de nutation (41).

4. Hélicoptère à rotor basculant selon la revendication 3, caractérisé en ce que les articulations (H1.1-H3.2) respectives du premier rotor (7) sont reliées d'une façon permettant une manoeuvre dans le même sens et en sens opposé, par l'intermédiaire de dispositifs de commande (33, 34, 35, 39, 42.1, 42.2, H1.1-H3.2) aux articulations (H1.1-H3.2) respectives du deuxième rotor (8).

5. Hélicoptère à rotor basculant selon une ou plusieurs des revendications précitées, caractérisé en ce que les rotors (7, 8) sont reliés ensemble et entraînés en toute position de basculement, par l'intermédiaire de transmissions (11, 12, 36).

6. Hélicoptère à rotor basculant selon une ou plusieurs des revendications précitées, caractérisé en ce que les arbres de rotor (19, 20) des rotors (7, 8) sont reliés de façon à pouvoir pivoter autour des axes de pivotement (17, 18), chaque fois au moyen d'un support de rotor (9, 10) en forme de fourche, à l'aide de transmissions à engrenages coniques (11, 12).

7. Hélicoptère à rotor basculant selon la revendication 4, caractérisé en ce que les dispositifs de commande (33, 34, 35) disposent d'un ou plusieurs mélangeurs (31), qui mélangent les fonctions de commande (S1-S6) des rotors (7, 8) en fonction de la position de basculement des rotors (7, 8).

8. Hélicoptère à rotor basculant selon la revendication 7, caractérisé en ce que celui-ci comprend un dispositif de réglage d'assiette (42), permettant un réglage d'assiette séparé des fonctions de commande (S1-S6) mélangées par le mélangeur (31), dans chaque position de basculement des rotors (7, 8).

9. Hélicoptère à rotor basculant selon une ou plusieurs des revendications précédentes, caractérisé en ce que celui-ci comprend un dispositif de basculement (11-16, 21-24, 27, 28) électrique, mécanique ou hydraulique, pour assurer le basculement des rotors (7, 8).

10. Hélicoptère à rotor basculant selon une ou plusieurs des revendications précédentes, caractérisé en ce que celui-ci est équipé d'empennages (3.1, 3.2), assistant la commande en vol en avion.
